# FASCICULE DE BREVET EUROPEEN

(11) **EP 3 195 077 B1**
(45) Date de publication et mention de la délivrance du brevet: **14.04.2021**
(21) Numéro de dépôt: 15763930.3
(22) Date de dépôt: 17.09.2015
(51) Int. Cl.: G05D 1/02, G01C 21/32, G01S 7/48

(54) **PROCÉDÉ ET SYSTÈME DE LOCALISATION ET DE CARTOGRAPHIE**
ORTUNGS- UND ABBILDUNGSVERFAHREN UND -SYSTEM
LOCALISATION AND MAPPING METHOD AND SYSTEM

(30) Priorité: 17.09.2014 FR 1402084
(43) Date de publication de la demande: 26.07.2017
(73) Titulaire: Valeo Schalter und Sensoren GmbH, 74321 Bietigheim-Bissingen (DE)
(72) Inventeur: RESENDE, Paulo, F-94046 Créteil Cedex (FR)
(74) Mandataire: Claassen, Maarten Pieter
(86) Numéro de dépôt international: PCT/EP2015/071378
(87) Numéro de publication internationale: WO 2016/042106

(56) Documents cités:
- WO-A1-2013/076829
- US-A1- 2010 161 225
- BAIG Q ET AL: "Online localization and mapping with moving objects detection in dynamic outdoor environments", INTELLIGENT COMPUTER COMMUNICATION AND PROCESSING, 2009. ICCP 2009. IEEE 5TH INTERNATIONAL CONFERENCE ON, IEEE, PISCATAWAY, NJ, USA, 27 août 2009 (2009-08-27), pages 401-408, XP031545073, ISBN: 978-1-4244-5007-7
- HUIJING ZHAO ET AL: "Driving safety and traffic data collection - A laser scanner based approach", INTELLIGENT VEHICLES SYMPOSIUM, 2008 IEEE, IEEE, PISCATAWAY, NJ, USA, 4 juin 2008 (2008-06-04), pages 329-336, XP031318829, ISBN: 978-1-4244-2568-6
- C.-C. WANG ET AL: "Simultaneous Localization, Mapping and Moving Object Tracking", THE INTERNATIONAL JOURNAL OF ROBOTICS RESEARCH, vol. 26, no. 9, 30 septembre 2007 (2007-09-30), pages 889-916, XP055178633, ISSN: 0278-3649, DOI: 10.1177/0278364907081229

## Description

### DOMAINE TECHNIQUE AUQUEL SE RAPPORTE L'INVENTION

La présente invention concerne les techniques de localisation et de cartographie utilisables par un engin mobile dans un environnement contenant des objets mobiles.

Elle concerne plus particulièrement un procédé de localisation et de cartographie et un système de localisation et de cartographie.

L'invention s'applique particulièrement avantageusement dans le cas où certains objets présents dans l'environnement sont fixes lors du passage de l'engin mobile équipé du système de localisation et de cartographie, mais sont susceptibles d'être déplacés ultérieurement.

### ARRIERE-PLAN TECHNOLOGIQUE

On connaît des procédés de localisation et de cartographie utilisés par un engin (par exemple un robot ou un véhicule automobile) mobile dans un environnement afin de construire, sur la base des seules informations délivrées par un ou plusieurs capteur(s) embarqué(s) par l'engin mobile, une carte de l'environnement.

Les procédés de ce type sont généralement désignés par l'acronyme anglo-saxon SLAM (pour *"Simultaneous Localization And Mapping"* : localisation et cartographie simultanées).

Un exemple d'un tel procédé utilisant un capteur visuel (par exemple une caméra vidéo) est décrit dans la demande de brevet WO 2004/059 900.

D'autres exemples de ces procédés sont décrits dans l'article intitulé "Online localization and mapping with moving objects detection in dynamic outdoor environments" de Qadeer Baig et al., dans l'article intitulé "Driving safety and traffic data collection - A laser scanner based approach" de Huijing Zhao et al., dans l'article intitulé "Simultaneous Localisation, Mapping an Moving Object Tracking" de Chieh-Chih Wang et al, ainsi que dans les documents WO 2013/076829 A1 et US 2010/161225 A1.

Les algorithmes de localisation et de cartographie sont en général conçus pour ne cartographier que les parties fixes de l'environnement et ne mémorisent donc pas la position des objets mobiles lors de la mise en œuvre de l'algorithme, c'est-à-dire lors du passage de l'engin mobile à proximité de ces objets.

Un problème se pose en revanche pour les objets fixes lors du passage de l'engin mobile, mais qui peuvent être déplacés à un moment ultérieur et ne font donc pas réellement partie de l'environnement fixe que l'on souhaite cartographier.

En particulier, lors d'un passage ultérieur dans la région où était situé l'objet déplacé, l'algorithme de localisation et de cartographie ne reconnaîtra pas l'environnement précédemment cartographié et recommencera le processus de construction de la carte, ce qui n'est bien sûr pas efficace.

### OBJET DE L'INVENTION

Dans ce contexte, la présente invention propose un procédé de localisation et de cartographie utilisé par un engin mobile dans un environnement, comprenant les étapes définies par la revendication 1.

Ainsi, l'algorithme de localisation et de cartographie est mis en œuvre sur la base des composantes de l'environnement qui sont fixes à long terme. La carte construite par un tel procédé est donc plus robuste et pourra être facilement ré-utilisée puisque les éléments qui la composent seront tous présents lors d'un passage ultérieur de l'engin mobile dans le même environnement.

Selon d'autres caractéristiques optionnelles, et donc non limitatives :
- le capteur est un lidar ;
- ladite détermination est réalisée par reconnaissance de forme ou d'une signature dans les données reçues ;
- le capteur est un capteur d'image ;
- ladite détermination est réalisée par reconnaissance de forme dans au moins une image représentée par les données reçues ;
- les données de détection sont issues du capteur embarqué ;
- l'algorithme de localisation utilise ledit objet comme point de repère si le type déterminé est un type d'objet fixe ;
- l'algorithme de localisation utilise les données de détection relatives à une zone donnée si aucun objet situé dans ladite zone donnée n'est détecté avec type correspondant à un type d'objet mobile ;
- l'algorithme de localisation mis en œuvre effectue la construction d'une carte de l'environnement, par exemple par recherche de correspondance entre une version de la carte en cours de construction et des données de balayage fournies par un capteur embarqué et/ou des points d'intérêts détectés dans une image fournie par un capteur embarqué, ce qui permet également la localisation de l'engin mobile dans ladite carte.

Le procédé de localisation et de cartographie peut en outre comprendre les étapes suivantes :
- sauvegarde de la carte construite ;
- à un moment ultérieur (par exemple lors de la détection d'un environnement avoisinant semblable à celui représenté dans la carte construite), chargement et ré-utilisation de la carte construite par l'algorithme de localisation.

L'invention propose également un système de localisation et de cartographie destiné à équiper un engin mobile dans un environnement, selon la revendication 11.

Les caractéristiques optionnelles présentées ci-dessus en termes de procédé peuvent également s'appliquer à un tel système.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un véhicule automobile équipé d'un système de localisation et de cartographie conforme à l'invention ;
- la figure 2 représente un exemple de contexte particulier que peut rencontrer le véhicule de la figure 1 ;
- la figure 3 représente schématiquement un premier exemple de système de localisation et de cartographie conforme à l'invention ;
- la figure 4 représente une table de données utilisée dans le système de la figure 3 ;
- la figure 5 représente schématiquement un second exemple de système de localisation et de cartographie conforme à l'invention ; et
- la figure 6 illustre les étapes principales d'un procédé de localisation et de cartographie conforme à l'invention.

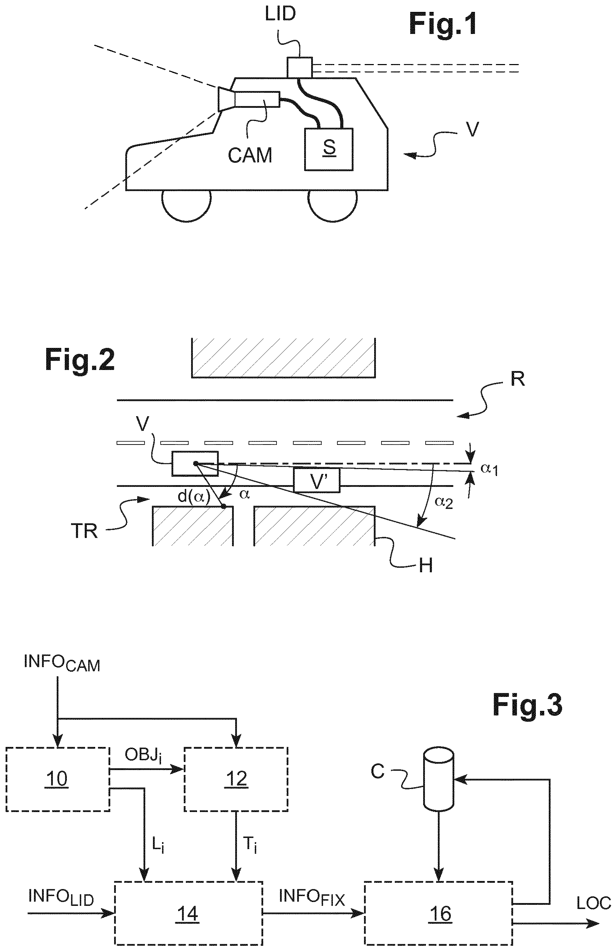

La figure 1 représente un véhicule automobile V équipé d'un système de localisation et de cartographie S.

Le système de localisation et de cartographie S est ici réalisé sous forme d'un dispositif de traitement à base de microprocesseur.

Un tel dispositif de traitement comprend au moins une mémoire (par exemple une mémoire morte ou une mémoire non-volatile réinscriptible, ainsi qu'en général une mémoire vive) adaptée à mémoriser des instructions de programme d'ordinateur dont l'exécution par le microprocesseur du dispositif de traitement entraîne la mise en œuvre, par le dispositif de traitement, des procédés et traitements décrits ci-dessous.

Le véhicule automobile V comprend un ou plusieurs capteur(s) embarqué(s), par exemple un capteur visuel tel qu'une caméra vidéo CAM et/ou un capteur de distance tel qu'un télédétecteur par laser ou lidar (acronyme de "*light detection and ranging*") LID.

Le système de localisation et de cartographie S reçoit les données INFO_{CAM}, INFO_{LID} générées par le ou les capteur(s) embarqué(s) et les traite dans le but à la fois de construire une carte C de l'environnement dans lequel évolue le véhicule automobile V et d'obtenir la localisation du véhicule V dans la carte C construite.

La figure 2 représente un exemple de contexte que peut rencontrer le véhicule V.

Dans cet exemple, le véhicule V évolue dans une rue R à double sens de circulation, bordée de part et d'autre de la chaussée par un trottoir TR, puis au-delà du trottoir TR par des habitations H. Un véhicule tiers V' est stationné dans la partie de la rue R située à l'avant du véhicule V, à cheval sur la chaussée de la rue R et sur le trottoir TR.

La figure 3 représente schématiquement un premier exemple de système de localisation et de cartographie conforme à l'invention. Dans cet exemple, le système de localisation et de cartographie S utilise les données INFO_{CAM}, INFO_{LID} délivrées par deux capteurs (ici la caméra vidéo CAM et le lidar LID).

La figure 3 présente des modules fonctionnels qui correspondent chacun à un traitement particulier effectué par le système de localisation et de traitement S. Dans l'exemple décrit ici, les traitements sont effectués comme déjà indiqué du fait de l'exécution, par le microprocesseur du système S, d'instructions de programme d'ordinateur mémorisées dans une mémoire du système S. En variante, les traitements effectués par un ou plusieurs module(s) fonctionnel(s) pourraient être mis en œuvre par un circuit intégré dédié, par exemple un circuit intégré à application spécifique (ou ASIC pour "*Application Specific Integrated Circuit*").

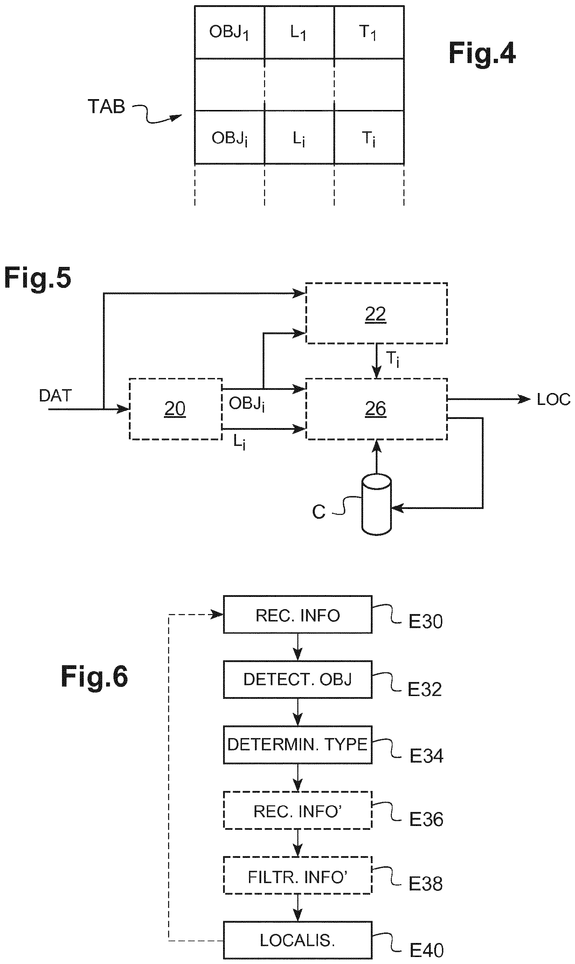

Le système de la figure 3 comprend un module de détection 10 qui reçoit les données INFO_{CAM} générées par un premier capteur, ici la caméra vidéo CAM, et génère, pour chaque objet détecté OBJᵢ, des informations de localisation Lᵢ de l'objet concerné. Les informations de localisation Lᵢ sont par exemple mémorisées au sein d'une table TAB mémorisée dans la mémoire du système S, comme schématiquement représenté en figure 4.

Dans l'exemple décrit ici, les données INFO_{CAM} représentent des images successivement prises par la caméra vidéo CAM ; les objets OBJᵢ sont détectés et situés par rapport au véhicule automobile V par analyse de ces images, comme cela est décrit par exemple dans la demande de brevet WO 2004/059 900 déjà mentionnée en introduction.

Dans le contexte de la figure 2, le module de détection 10 détecte par exemple le véhicule tiers V' comme objet OBJ₁ et détermine sa localisation (définie par les informations de localisation L₁) par rapport au véhicule V par analyse des images fournies par la caméra vidéo CAM.

Le système de la figure 3 comprend également un module de classification 12 qui reçoit en entrée les données INFO_{CAM} générées par le premier capteur (ici la caméra vidéo CAM) et une désignation des objets OBJᵢ détectés (incluant par exemple leur position dans l'image reçue de la caméra vidéo CAM).

Le module de classification 12 est conçu pour identifier le type Tᵢ de chaque objet OBJᵢ sur la base des données INFO_{CAM} reçues du premier capteur, par exemple, dans le cas décrit ici où les données INFO_{CAM} représentent une image, au moyen d'un algorithme de reconnaissance de forme.

En variante, le premier capteur pourrait être le lidar LID, auquel cas l'identification du type d'un objet OBJᵢ pourrait être réalisé par exemple sur la base de la signature du signal reçu par le lidar LID par réflexion sur l'objet OBJᵢ.

L'identification du type Tᵢ de l'objet OBJᵢ permet de le classifier parmi plusieurs types d'objets (par exemple véhicule, piéton, cycliste, habitation, élément d'éclairage ou de signalisation de la voirie, *etc*.) et de déterminer ainsi si cet objet OBJᵢ a un type mobile ou un type fixe. On remarque que la classification selon le type d'objet est réalisée indépendamment du fait que l'objet concerné est effectivement fixe ou mobile lors du passage du véhicule V.

Par exemple, dans le contexte de la figure 2, le module de classification 12 détermine, par reconnaissance de forme, que l'objet OBJ₁ (c'est-à-dire le véhicule tiers V' comme expliqué ci-dessus) est de type véhicule.

Le type d'objet Tᵢ est mémorisé, en regard de l'objet concerné OBJᵢ, dans la table TAB précitée, comme représenté en figure 4. En variante, l'information mémorisée pourrait se limiter à une indication de mobilité ou de fixité de l'objet concerné OBJᵢ, indication déterminée sur la base du type Tᵢ identifié comme indiqué ci-dessus.

On a décrit pour la clarté de l'exposé le module de détection 10 et le module de classification 12 comme deux modules séparés. Il est toutefois envisageable que la détection d'un objet OBJᵢ et l'identification de son type Tᵢ (qui permet sa classification en tant qu'objet mobile ou en tant qu'objet fixe) soient réalisées au cours d'une même étape, par exemple au moyen d'un algorithme de reconnaissance de forme dans les images délivrées par la caméra vidéo CAM.

Le système S comprend un module de filtrage 14 qui reçoit les données INFO_{LID} reçues du second capteur, ici le lidar LID. Le module de filtrage 14 utilise également la localisation Lᵢ de chaque objet OBJᵢ détecté par le module de détection 10 et le type Ti de chaque objet déterminé par le module de classification 12 (ces informations pouvant être reçues du module concerné ou lues dans la table TAB mémorisée).

Dans l'exemple décrit ici, les données INFO_{LID} délivrées par le lidar représentent par exemple un ensemble de valeurs de distance d(a) de détection associées respectivement à des angles α sur toute la plage angulaire 0° - 360°.

Le module de filtrage 14 ne transmet, parmi les données INFO_{LID}, que les données INFO_{FIX} qui correspondent à des zones pour lesquelles aucun objet n'a été détecté ou pour lesquelles un objet OBJᵢ a été détecté avec un type Tᵢ d'objet fixe, d'après les informations générées par les modules de détection et de classification 10, 12 comme décrit ci-dessus. Autrement dit, le module de filtrage 14 ne transmet pas les données INFO_{LID} relatives à des zones pour lesquelles un objet OBJᵢ a été détecté avec un type Tᵢ d'objet mobile.

Dans le contexte de la figure 2, l'objet OBJ₁ (véhicule tiers V') détecté avec un type Tᵢ d'objet mobile (véhicule) couvre, d'après les informations de localisation L₁, la plage angulaire α₁ - α₂ de sorte qu'en l'absence d'autre objet identifié avec un type d'objet mobile, le module de filtrage 14 transmet seulement les données INFO_{FIX} associées aux plages angulaires [0°, α₁ [et] α₂, 360°[(c'est-à-dire les données représentatives des valeurs d(α) seulement pour 0 ≤ α < α₁ et α₂ < α < 360°).

Les données transmises INFO_{FIX}, après filtrage, par le module de filtrage 14 sont reçues par un module de localisation 16, qui utilise ces données INFO_{FIX} pour la mise en œuvre d'un algorithme de localisation et de cartographie simultanées, par exemple tel que décrit dans l'article "A real-time robust SLAM for large-scale outdoor environments", de J. Xie, F. Nashashibi, M. N. Parent, et O. Garcia-Favrot, in ITS Warld Congress, 2010.

Le module de localisation 16 permet, en fonction des données INFO_{FIX} issues du second capteur (dans l'exemple décrit, le lidar LID), ici après filtrage, et en utilisant une carte C construite par le module de localisation 16 au cours des itérations précédentes, d'une part de déterminer la position courante (ou localisation) LOC du véhicule V dans la carte C et d'autre part d'enrichir la carte C, notamment grâce à la présence, parmi les donnes INFO_{FIX}, des données relatives à des zones non atteintes par le lidar LID lors des itérations précédentes.

On remarque toutefois que, grâce au rejet (par le module de filtrage 14) des données INFO_{LID} relatives à des zones où un objet OBJᵢ a été détecté avec un type Tᵢ d'objet mobile, seules des données relatives à des objets présents à demeure sont traitées par le module de localisation 16, ce qui évite le traitement de données en réalité inutiles (d'où une accélération du traitement) et permet en outre la construction d'une carte sans objet susceptible d'être déplacé ultérieurement : une telle carte est plus robuste et facilement réutilisable.

La figure 5 représente schématiquement un second exemple de système de localisation et de cartographie conforme à l'invention. Dans cet exemple, le système de localisation et de cartographie S utilise les données DAT délivrées par un seul capteur, ici la caméra vidéo CAM.

Comme pour la figure 3, la figure 5 présente des modules fonctionnels qui correspondent chacun à un traitement particulier effectué par le système de localisation et de traitement S, ici du fait de l'exécution, par le microprocesseur du système S, d'instructions de programme d'ordinateur mémorisées dans une mémoire du système S. En variante, les traitements effectués par un ou plusieurs module(s) fonctionnel(s) pourraient être mis en œuvre par un circuit intégré dédié, par exemple un circuit intégré à application spécifique (ou ASIC pour "*Application Specific Integrated Circuit*").

Le système de la figure 5 comprend un module de détection 20 qui reçoit les données DAT générées par le capteur, ici des données représentatives d'images prises par la caméra vidéo CAM, et génère, pour chaque objet détecté OBJᵢ (ici par analyse de ces images), des informations de localisation Lᵢ de l'objet concerné. Les informations de localisation Lᵢ sont par exemple mémorisées au sein d'une table TAB mémorisée dans la mémoire du système S, comme schématiquement représenté en figure 4.

Le système S de la figure 5 comprend un module de classification 22 qui reçoit en entrée les données DAT générées par le capteur (ici la caméra vidéo CAM) et une désignation des objets OBJᵢ détectés (incluant par exemple leur position dans l'image reçue de la caméra vidéo CAM).

Le module de classification 12 est conçu pour identifier le type Tᵢ de chaque objet OBJᵢ sur la base des données DAT reçues du capteur, par exemple, dans le cas décrit ici où les données INFO_{CAM} représentent une image, au moyen d'un algorithme de reconnaissance de forme.

Comme déjà indiqué à propos de la figure 3, l'identification du type Tᵢ de l'objet OBJᵢ permet de le classifier parmi plusieurs types d'objet et de déterminer ainsi si cet objet OBJᵢ a un type mobile ou un type fixe, indépendamment du fait que l'objet concerné est effectivement fixe ou mobile lors du passage du véhicule V.

Le type d'objet Tᵢ est mémorisé, en regard de l'objet concerné OBJᵢ, dans la table TAB précitée, comme représenté en figure 4. En variante, l'information mémorisée pourrait se limiter à une indication de mobilité ou de fixité du type d'objet Tᵢ reconnu pour l'objet concerné OBJᵢ.

Comme déjà indiqué à propos de la figure 3, il est envisageable en variante que la détection d'un objet OBJᵢ et l'identification de son type Tᵢ (qui permet sa classification en tant qu'objet mobile ou en tant qu'objet fixe) soient réalisées au cours d'une même étape de traitement (c'est-à-dire par un même module fonctionnel).

Un module de localisation 26 reçoit, pour chaque objet détecté par le module de détection 20, la désignation de cet objet OBJᵢ, sa localisation Lᵢ et son type Tᵢ identifié, et met en œuvre, sur le base de ces informations, un algorithme de cartographie et de localisation simultanées, en utilisant également une carte C construite lors des précédentes itérations de l'algorithme.

La carte C inclut par exemple un ensemble de points de repère (ou amers, en anglais "*landmarks*") correspondant chacun à un objet détecté lors d'une itération précédente.

Le module de localisation 26 est conçu de sorte, lors du traitement qu'il effectue, seuls sont pris en compte les objets OBJᵢ pour lesquels le type Tᵢ associé ne correspond pas à un type d'objet mobile. Par exemple, avant de tenir compte des informations de localisation Lⱼ d'un objet OBJⱼ dans l'algorithme de cartographie et de localisation simultanées, le module de localisation 26 vérifie le type Tⱼ de l'objet OBJⱼ (ici par consultation de la table TAB mémorisée dans la mémoire du système S) et n'utilisera effectivement les informations de localisation Lⱼ dans l'algorithme que si le type Tⱼ est un type d'objet fixe, et non un type d'objet mobile.

Sur la base des informations de localisation Lᵢ d'objets dont le type Tᵢ correspond à un type d'objet fixe (mais sans tenir compte des informations de localisation Lᵢ d'objets dont le type Tᵢ correspond à un type d'objet mobile), le module de localisation 26 détermine la position courante (ou localisation) LOC du véhicule V dans la carte C (typiquement par comparaison de chaque objet OBJᵢ détecté avec les points de repère inclus dans la carte C) et enrichit la carte C (typiquement en ajoutant dans la carte C les objets OBJᵢ détectés qui ne correspondent à aucun point de repère afin qu'ils forment chacun un nouveau point de repère dans la carte C complétée).

Comme déjà indiqué à propos du premier exemple de système de localisation et de cartographie, la carte construite C est robuste et facilement réutilisable car elle est construite sur la base d'objets qui ne sont pas susceptibles d'être déplacés.

La figure 6 illustre les étapes principales d'un procédé de localisation et de cartographie conforme à l'invention.

Ce procédé débute par une étape E30 de réception de données générées par un capteur embarqué dans le véhicule V, ici la caméra vidéo CAM ou le lidar LID.

Le procédé se poursuit par une étape E32 de détection d'objets présents dans l'environnement dans lequel évolue le véhicule V, par analyse des données reçues du capteur embarqué à l'étape E30. Cette étape est mise en œuvre dans les exemples décrits ci-dessus par le module de détection 10, 20.

Le procédé comprend alors une étape E34 de détermination, pour chaque objet détecté à l'étape E32 et sur la base des données reçues du capteur embarqué à l'étape E30, du type de l'objet concerné, par exemple au moyen d'un algorithme de reconnaissance de forme (lorsque les données reçues du capteur embarqué représentent une image) ou au moyen d'un algorithme de reconnaissance de signature (lorsque les données reçues du capteur embarqué représentent un signal). Cette étape est mise en œuvre dans les exemples décrits ci-dessus par le module de classification 12, 22.

On remarque que l'on pourrait en variante utiliser les données issues de plusieurs capteurs pour classifier les objets selon leur type, éventuellement après une étape de fusion des données issues des différents capteurs.

Lorsque deux capteurs sont utilisés respectivement pour la classification des objets et pour la localisation de l'engin mobile, comme dans le premier exemple donné ci-dessus en référence à la figure 3, le procédé comprend une étape E36 de réception de données générées par le second capteur.

Le procédé peut alors éventuellement inclure une étape E38 de filtrage des données reçues à l'étape E36 afin de rejeter les données relatives aux objets dont le type déterminé à l'étape E34 est un type d'objet mobile, ou relatives à des zones de l'environnement où un objet a été détecté avec un type (déterminé à l'étape E34) correspondant à un type d'objet mobile. Le module de filtrage 14 utilisé dans le premier exemple décrit ci-dessus en référence à la figure 3 met en œuvre une telle étape.

En variante, comme dans le cas du second exemple décrit en référence à la figure 5, le procédé n'inclut pas spécifiquement une étape de filtrage ; l'étape de localisation décrite ci-dessous est dans ce cas conçue pour fonctionner sans tenir compte des données relatives aux objets dont le type déterminé à l'étape E34 est un type d'objet mobile, ou relatives à des zones de l'environnement où un objet a été détecté avec un type (déterminé à l'étape E34) correspondant à un type d'objet mobile.

Le procédé se poursuit par une étape E40 de localisation de l'engin mobile (ici le véhicule automobile V) sur la base de données de détection, qui peuvent être les données reçues à l'étape E30 et/ou les données reçues à l'étape E36 (lorsqu'une telle étape est mise en œuvre), et sur la base d'une carte construite lors des itérations préalables du procédé.

Cette étape E40 comprend la mise en œuvre d'un algorithme de localisation et de cartographie simultanées, qui permet non seulement la localisation de l'engin mais également l'enrichissement de la carte.

On remarque que, comme indiqué ci-dessus, les données utilisées par l'algorithme de localisation et de cartographie peut provenir de plusieurs capteurs embarqués, éventuellement après une étape de fusion des données issues des différents capteurs.

On prévoit alors en général que le procédé boucle à l'étape E30 pour la mise en œuvre, à un instant ultérieur, d'une nouvelle itération des étapes E30 à E40.

La carte construite au cours du processus qui vient d'être décrit est en permanence sauvegardée afin de pouvoir être ré-utilisée ultérieurement, par exemple lors du passage de l'engin mobile (ici le véhicule automobile V) dans l'environnement à un moment ultérieur (par exemple un jour différent postérieur au jour où la carte a été construite).

Le système de localisation et de cartographie S intègre par exemple pour ce faire un mécanisme de comparaison de la carte en cours de construction aux cartes préalablement construites (et mémorisées) en vue de ré-utiliser ces dernières. Ainsi, lorsque l'engin mobile circule à nouveau dans le même environnement audit moment ultérieur, le mécanisme de comparaison permet de reconnaître l'environnement avoisinant comme celui représenté dans la carte préalablement construite et d'utiliser la carte préalablement construite (en chargeant cette carte en mémoire et en l'utilisant dans l'algorithme de localisation et de cartographie).

Le mécanisme de comparaison fonctionne particulièrement bien lorsque la carte mémorisée a été construite par le procédé décrit ci-dessus, du fait qu'une telle carte ne contient que des informations relatives à des objets qui demeurent fixes et ne contient pas d'informations relatives à des objets qui ne seront plus présent lors du passage ultérieur. L'invention permet donc une cartographie utilisable à long terme pour la localisation de l'engin mobile.

## Revendications

1. Procédé de localisation et de cartographie utilisé par un engin (V) mobile dans un environnement dans lequel évolue ledit engin (V) mobile, comprenant une étape de :
- détermination (E34), à partir de données (INFO_{CAM} ; DAT) reçues d'un capteur (CAM) embarqué dans l'engin mobile (V), du type (Tᵢ) des objets (OBJᵢ) situés dans une zone de l'environnement ;
**caractérisé en ce que** le procédé comprend une étape de
- mise en œuvre (E40) d'un algorithme de localisation utilisant des données de détection (INFO_{LID} ; DAT), sans prise en compte des données de détection (INFO_{LID} ; DAT) relatives auxdits objets (OBJᵢ) lorsque le type déterminé (Tᵢ) est un type d'objet mobile le procédé étant tel que les données de détection (INFO_{LID}) sont issues d'un autre capteur (LID) distinct dudit capteur embarqué (CAM).

2. Procédé selon la revendication 1, dans lequel le capteur embarqué (CAM) est un lidar.

3. Procédé selon la revendication 2, dans lequel ladite détermination est réalisée par reconnaissance de forme ou d'une signature dans les données reçues.

4. Procédé selon la revendication 1, dans lequel le capteur embarqué (CAM) est un capteur d'image.

5. Procédé selon la revendication 4, dans lequel ladite détermination est réalisée par reconnaissance de forme dans au moins une image représentée par les données reçues (INFO_{CAM}).

6. Procédé selon l'une des revendications 1 à 5, dans lequel les données de détection (DAT) sont issues du capteur embarqué (CAM).

7. Procédé selon l'une des revendications 1 à 6, dans lequel l'algorithme de localisation utilise ledit objet (OBJᵢ) comme point de repère si le type déterminé (Tᵢ) est un type d'objet fixe.

8. Procédé selon l'une des revendications 1 à 6, dans lequel l'algorithme de localisation utilise les données de détection (INFO_{LID}) relatives à une zone donnée si aucun objet situé dans ladite zone donnée n'est détecté avec type correspondant à un type d'objet mobile.

9. Procédé selon l'une des revendications 1 à 8, dans lequel l'algorithme de localisation mis en œuvre effectue la construction d'une carte (C) de l'environnement.

10. Procédé selon la revendication 9, comprenant les étapes suivantes :
- sauvegarde de la carte construite (C) ;
- à un moment ultérieur, chargement et ré-utilisation de la carte construite (C) par l'algorithme de localisation.

11. Système de localisation et de cartographie (S) destiné à équiper un engin (V) mobile dans un environnement dans lequel évolue ledit engin (V) mobile, comprenant :
- un module (12 ; 22) de détermination, à partir de données (INFO_{CAM} ; DAT) reçues d'un capteur (CAM) embarqué dans l'engin mobile, du type (Tᵢ) des objets (OBJᵢ) situés dans une zone de l'environnement ;
**caractérisé en ce que** le système comprend
- un module de localisation (16; 26) conçu pour localiser l'engin mobile (V) en fonction de données de détection (INFO_{LID} ; DAT), sans prise en compte des données de détection relatives auxdits objets (OBJᵢ) lorsque le type déterminé (Tᵢ) est un type d'objet mobile le système étant tel que les données de détection (INFO_{LID}) sont issues d'un autre capteur (LID) distinct dudit capteur embarqué (CAM).

12. Un programme d'ordinateur, comprenant des moyens de code de programme pour mettre en œuvre le procédé de l'une quelconque des revendications 1 à 10, lorsque ledit programme fonctionne sur un ordinateur.

13. Un produit de programme d'ordinateur, comprenant des moyens de code de programme, stocké sur un milieu lisible par un ordinateur, pour mettre en œuvre le procédé selon l'une quelconque des revendications 1 à 10, lorsque ledit produit de programme fonctionne sur un ordinateur.

## Patentansprüche

1. Ortungs- und Kartierungsverfahren, das von einer mobilen Maschine (V) in einer Umgebung genutzt wird, in der sich die mobile Maschine (V) bewegt, umfassend einen Schritt des:
- Bestimmens (E34), ausgehend von Daten (INFO_{CAM}; DAT), die von einem bordeigenen Sensor (CAM) in der mobilen Maschine (V) empfangen werden, des Typs (Tᵢ) der Objekte (OBJi), die sich in einem Bereich der Umgebung befinden;
**dadurch gekennzeichnet, dass** das Verfahren einen Schritt des
- Implementierens (E40) eines Ortungsalgorithmus umfasst, der Detektionsdaten (INFO_{LID}; DAT) ohne Berücksichtigung der Detektionsdaten (INFO_{LID}; DAT) in Bezug auf die Objekte (OBJᵢ) nutzt, wenn der bestimmte Typ (Tᵢ) ein mobiler Objekttyp ist, wobei das Verfahren so beschaffen ist, dass die Detektionsdaten (INFO_{LID}) von einem anderen Sensor (LID) stammen, der von dem bordeigenen Sensor (CAM) verschieden ist.

2. Verfahren nach Anspruch 1, wobei der bordeigene Sensor (CAM) ein Lidar ist.

3. Verfahren nach Anspruch 2, wobei das Bestimmen durch Erkennung einer Form oder Signatur in den empfangenen Daten durchgeführt wird.

4. Verfahren nach Anspruch 1, wobei der bordeigene Sensor (CAM) ein Bildsensor ist.

5. Verfahren nach Anspruch 4, wobei das Bestimmen durch Erkennung einer Form in mindestens einem Bild durchgeführt wird, das von den empfangenen Daten (INFO_{CAM}) dargestellt wird.

6. Verfahren nach einem der Ansprüche 1 bis 5, wobei die Detektionsdaten (DAT) von dem bordeigenen Sensor (CAM) stammen.

7. Verfahren nach einem der Ansprüche 1 bis 6, wobei der Ortungsalgorithmus das Objekt (OBJᵢ) als Bezugspunkt nutzt, wenn der bestimmte Typ (Tᵢ) ein fester Objekttyp ist.

8. Verfahren nach einem der Ansprüche 1 bis 6, wobei der Ortungsalgorithmus die Detektionsdaten (INFO_{LID}) in Bezug auf einen bestimmten Bereich nutzt, wenn kein Objekt, das sich in dem bestimmten Bereich befindet, mit einem Typen erkannt wird, der einem mobilen Objekttypen entspricht.

9. Verfahren nach einem der Ansprüche 1 bis 8, wobei der implementierte Ortungsalgorithmus den Aufbau einer Karte (C) der Umgebung durchführt.

10. Verfahren nach Anspruch 9, umfassend die folgenden Schritte:
- Sichern der aufgebauten Karte (C);
- Laden und Wiederverwenden der aufgebauten Karte (C) durch den Ortungsalgorithmus zu einem späteren Zeitpunkt.

11. Ortungs- und Kartierungssystem (S) zur Ausrüstung einer mobilen Maschine (V) in einer Umgebung, in der sich die mobile Maschine (V) bewegt, umfassend:
- ein Modul (12; 22) zum Bestimmen des Typs (Tᵢ) der Objekte (OBJᵢ), die sich in einem Bereich der Umgebung befinden, ausgehend von Daten (INFO_{CAM}; DAT), die von einem bordeigenen Sensor (CAM) in der mobilen Maschine empfangen werden;
**dadurch gekennzeichnet, dass** das System Folgendes umfasst:
- ein Ortungsmodul (16; 26), das ausgelegt ist, die mobile Maschine (V) in Abhängigkeit von Detektionsdaten (INFO_{LID}; DAT) ohne Berücksichtigung der Detektionsdaten (INFO_{LID}) in Bezug auf die Objekte (OBJᵢ) zu orten, wenn der bestimmte Typ (Tᵢ) ein mobiler Objekttyp ist, wobei das System so beschaffen ist, dass die Detektionsdaten (INFO_{LID}) von einem anderen Sensor (LID) stammen, der von dem bordeigenen Sensor (CAM) verschieden ist.

12. Computerprogramm umfassend Programmcodemittel zur Implementierung des Verfahrens nach einem der Ansprüche 1 bis 10, wenn das Programm auf einem Computer läuft.

13. Computerprogrammprodukt umfassend Programmcodemittel, das auf einem computerlesbaren Medium gespeichert ist, zur Implementierung des Verfahrens nach einem der Ansprüche 1 bis 10, wenn das Programmprodukt auf einem Computer läuft.

## Claims

1. Localization and mapping method used by a moving machine (V) in an environment in which said moving machine (V) is moving, comprising a step of:
- determining (E34), on the basis of data (INFO_{CAM}; DAT) received from a sensor (CAM) embedded in the moving machine (V), the type (Tᵢ) of the objects (OBJᵢ) situated in a zone of the environment;
**characterized in that** the method comprises a step of
- implementing (E40) a localization algorithm using detection data (INFO_{LID}; DAT), without taking into account the detection data (INFO_{LID}; DAT) relating to said objects (OBJᵢ) when the determined type (Tᵢ) is a moving type of object, the method being such that the detection data (INFO_{LID}) originate from another sensor (LID) which is different from said embedded sensor (CAM).

2. Method according to Claim 1, wherein the embedded sensor (CAM) is a LIDAR.

3. Method according to Claim 2, wherein said determination is performed by shape recognition or recognition of a signature in the received data.

4. Method according to Claim 1, wherein the embedded sensor (CAM) is an image sensor.

5. Method according to Claim 4, wherein said determination is performed by shape recognition in at least one image represented by the received data (INFO_{CAM}).

6. Method according to one of Claims 1 to 5, wherein the detection data (DAT) originate from the embedded sensor (CAM).

7. Method according to one of Claims 1 to 6, wherein the localization algorithm uses said object (OBJᵢ) as a reference point if the determined type (Tᵢ) is a fixed type of object.

8. Method according to one of Claims 1 to 6, wherein the localization algorithm uses the detection data (INFO_{LID}) relating to a given zone if no object situated in said given zone is detected with a type corresponding to a moving type of object.

9. Method according to one of Claims 1 to 8, wherein the implemented localization algorithm carries out the construction of a map (C) of the environment.

10. Method according to Claim 9, comprising the following steps:
- saving the constructed map (C);
- at a later point, loading and reusing the map (C) constructed by the localization algorithm.

11. Localization and mapping system (S) intended to be fitted to a machine (V) moving in an environment in which said moving machine (V) is moving, comprising:
- a module (12; 22) for determining, on the basis of data (INFO_{CAM}; DAT) received from a sensor (CAM) embedded in the moving machine, the type (Tᵢ) of the objects (OBJᵢ) situated in a zone of the environment;
**characterized in that** the system comprises
- a localization module (16; 26) designed to locate the moving machine (V) depending on detection data (INFO_{LID}; DAT), without taking into account the detection data relating to said objects (OBJᵢ) when the determined type (Tᵢ) is a moving type of object, the system being such that the detection data (INFO_{LID}) originate from another sensor (LID) which is different from said embedded sensor (CAM).

12. Computer program, comprising program code means for implementing the method of any one of Claims 1 to 10 when said program operates on a computer.

13. Computer program product, comprising program code means, stored on a computer-readable medium, for implementing the method according to any one of Claims 1 to 10 when said program product operates on a computer.
